# EUROPEAN PATENT SPECIFICATION

(11) **EP 1 962 613 B1**
(45) Date of publication and mention of the grant of the patent: **05.03.2014**
(21) Application number: 06824320.3
(22) Date of filing: 21.12.2006
(51) Int. Cl.: A23J 3/04, A23J 3/08, A23J 3/14

(54) **CONTROLLED GELATION OF PROTEIN MIXTURE BY GLYCOSYLATION**
KONTROLLIERTE GELBILDUNG EINER PROTEINMISCHUNG DURCH CLYCOSYLIERUNG
GELIFICATION CONTROLEE D'UN MELANGE PROTEINIQUE PAR GLYCOSYLATION

(30) Priority: 23.12.2005 EP 05112947
(43) Date of publication of application: 03.09.2008
(73) Proprietor: Friesland Brands B.V., 7943 PE Meppel (NL)
(72) Inventor: DE JONGH, Harmen Henri Jacobus, NL-3705 LG Zeist (NL); BROERSEN, Kerensa, Cambridge CB4 3EZ (GB)
(74) Representative: Nederlandsch Octrooibureau
(86) International application number: PCT/NL2006/050325
(87) International publication number: WO 2007/073189

(56) References cited:
- WO-A-00/18249
- US-A- 4 364 966
- CAMPBELL LYDIA ET AL: "Modification of functional properties of egg-white proteins." DIE NAHRUNG. DEC 2003, vol. 47, no. 6, December 2003 (2003-12), pages 369-376, XP002382050 ISSN: 0027-769X

## Description

### FIELD OF THE INVENTION

The present invention provides a method for modifying the aggregation behaviour of a mixture of gelling proteins. The invention also concerns mixed aqueous gels and foodstuffs comprising such mixed aqueous gels.

### BACKGROUND OF THE INVENTION

Aqueous solutions or dispersions of proteins or proteinaceous materials, such as egg albumin or whey protein, can be coagulated by heat to form solid gels which are thermally irreversible.

It is known, for instance form EP 581814, that the formation of gel-structures of proteins or proteinaceous materials can be influenced by modifying the proteins or proteinaceous materials by reacting these with reducing sugars. Such a reaction is known as a Maillard type reaction resulting in Maillard reaction products such as for instance glycosylated proteins. In EP 581814 the main focus is on the preparation of a clear or transparent gel.

US 4,364,966 discloses gels made from egg albumen and whey protein. WO 00/18249 discloses Maillardation of whey protein isolate. CAMPBELL ET AL: "Modification of functional properties of egg-white proteins." DIE NAHRUNG. DEC 2003, vol. 47, no. 6, December 2003 (2003-12), pages 369-376 mentions glycosylation for improving the functional properties of singular egg-white proteins.

In the field of food product development there is an ongoing need for novel processes and/or ingredients and/or modified ingredients that can result in or be used in food products with novel properties.

### SUMMARY OF THE INVENTION

The present inventors found that the denaturation temperature of β-lactoglobulin can be changed by modification, in particular by glycosylation, of the protein, such, that it resembles the denaturation temperature of ovalbumin. This opens the possibility of the formation, at the 'modified' denaturation temperature of β-lactoglobulin, mixed aggregates comprising both β-lactoglobulin and ovalbumin. Such a novel mixed aggregate has different properties compared to aggregates of β-lactoglobulin or ovalbumin alone, either modified or unmodified which in particular is translated into altered properties of the gel that can be formed of such a mixed aggregate.

The present inventors have shown that globular proteins can be glycosylated with mono and oligo-sugars in a controlled manner under relatively mild processing conditions. For example, incubation of β-lactoglobulin with glucose at 45 °C for 5 hours at pH 8 resulted in a degree of lysine-modification of about 30%. This glycoslyation resulted in a shift of the denaturation temperature from 73 to 81 °C. Similar treatment of ovalbumin also resulted in significant glycosylation but no shift in denaturation temperature was observed most likely due to the larger number of ion-pairs formed on the protein surface by the charged amino acids, stabilizing the protein.

Preparing for example equimolar β-lactoglobulin-ovalbumin mixtures either pre-processed in the presence of glucose or fructose or not, provide different efficiencies of incorporation into - or of homogeneities in - aggregates during heat-treatment, which in turn has a different impact on gel-structure and properties. These effects are apparent from the size of the protein aggregates formed that are used as building blocks for gel formation. Moreover, the efficiency of network incorporation and the gel strength are affected. Advantages of the control over these properties are for example the more efficient use of proteinaceous ingredients to obtain gelled stuffs with defined gel strength. Moreover, given a certain protein-ingredient composition the gel properties can be regulated.

In essence the invention thus concerns a method for the preparation of a mixed aggregate with modified aggregation behaviour of a mixture of at least two different gelling proteins said method comprising the subsequent steps of providing an aqueous solution containing an essentially undenatured glycosylated first gelling protein and an essentially undenatured second gelling protein and aggregating the glycosylated first gelling protein and the second gelling protein by heating the aqueous solution to a temperature above the aggregation temperature of both the first glycosylated gelling protein and the second gelling protein. Hereinafter the first gelling protein is also denoted as gelling protein (a) and the second gelling protein is also denoted as gelling protein (b). Besides first and second proteins also further, optionally glycosylated, proteins may be present or in other words, gelling protein (a) and/or gelling protein (b) may be comprised in a mixture of proteins. The first and second gelling protein should be present in an amount suitable for aggregation, in particular gelation, to occur. Suitable amounts are between 0.1 and 30 wt.%.

Also the invention relates to a mixed aqueous gel comprising a glycosylated first gelling protein and a second gelling protein (b). In order for the modified protein mixture to exert an effect on aggregation behaviour and thus on gel-structure and properties, protein (a) should be glycosylated to such a degree that at least 10% of the lysine residues are modified.

### DETAILED DESCRIPTION OF THE INVENTION

In particular, the invention relates to a method for the preparation of a mixed aggregate with modified aggregation behaviour of a mixture of at least two different gelling proteins (a) and (b), said method comprising the subsequent steps of:
a. combining essentially undenatured gelling protein (a) and reducing sugar in a weight ratio of between 20:1 and 1:20;
b. heating said combination to a temperature (T) above 25°C and below the denaturation temperature of the gelling protein (a) during a period of time (t) to glycosylate the gelling protein (a) to such a degree that at least 10% of the lysine residues are modified;
c. providing an aqueous solution containing between 0.1 and 30 wt.% of the glycosylated gelling protein (a) and between 0.1 and 30 wt.% of essentially undenatured gelling protein (b); and
d. aggregating the glycosylated gelling protein (a) and the gelling protein (b) by heating the aqueous solution to a temperature above the aggregation temperature of both the glycosylated gelling protein (a) and the gelling protein (b),
wherein the gelling protein (b) is included in step c.

In the method of the invention the aggregation behaviour of a mixture of at least two different gelling proteins ((a) and (b)) is modified. In an initial step of the present method essentially undenatured gelling protein (a) and reducing sugar is combined. Essentially undenatured is known to the skilled person and means that a protein is essentially in its native state. Essentially undenatured can be quantified by measuring the enthaplic change during denaturation, which suitably is at least 90% of the enthalpic change of a native control during denaturation.

Also the term gelling protein is known to the skilled person and in essence means proteins that are capable of forming a gel. A very important factor in gelation is the protein concentration and another very important factor in gelation temperature. In the context of the present invention a preferred definition of gelling proteins is proteins that are capable to evolve in gelled networks triggered by heat treatment. It is known that the concentration of protein can be relevant for gel formation to occur and that at too low concentration gelation does not occur. Other factors that might play a role in gelling of proteins are ionic strength, type of ion and pH. Thus alternatively gelling proteins is also defined as proteins that are capable to evolve in gelled networks depending upon ionic strength, type of ion and pH. In general globular proteins are capable of gelling, preferably capable of gelling upon heat treatment at a sufficient concentration of the globular protein. The skilled man is capable of determining what a sufficient concentration is.

The amount of reducing sugar to be combined with protein (a) should be sufficient to allow glycosylation of the protein to take place. The sufficient amount depends on the type of protein to be glycosylated and desired degree of glycosylation. For the altered gelling properties of the modified proteins according to this invention to occur it is desired that at least 10% of the lysine residues that are available for glycosylation in a protein are modified. Therefore a suitable amount of reducing sugar that is to be combined with protein (a) is at least 10% of the available lysine residues in protein (a). For example if a protein contains 10 lysine residues that are available for glycosylation, at least one molar equivalent of a reducing sugar is combined with this protein. It is to be understood that available lysine residues excludes those lysine residues that are in such a position in the native tertiary structure of a protein that they actually cannot be glycosylated. The amount of available lysine residues, and after modification the degree of glycosylation, can suitably be determined by titration assays known per se, such as for instance a titration using ortho-phtaldialdehyde (OPA) as essentially is described by Church et al. in Dairy Sci, 66:1219-1227, 1983, see also the Examples.

In the context of this invention a practical way of defining a suitable amount of reducing sugar to be combined with protein (a), is to express this in terms of a weight ratio. Thus in an embodiment a protein (a) and reducing sugar are combined in a weight ratio of between 20:1 and 1:20.

In step b of the present method the combination of protein (a) and reducing sugar is gently heated in order to let glycosylation of the protein take place. In the context of this invention glycosylation means reaction of the protein with a compound that comprises a reducing carbonyl moiety, in particular a carbonyl moiety that can react with a primary amine group in the protein(s) of interest to form a Schiff base. Usually the primary amine group in a protein of interest is the amine of a lysine residue. Preferably the compound that comprises a carbonyl moiety is a carbohydrate, which may be an aldose as well as a ketose. In one embodiment the carbohydrate is a monosaccharide with a reducing carbonyl group functionality. Carbohydrates with reducing capacity can be determined using the Luff reagens as described in the examples. Carbohydrates that test positive in the Luff assay thus are in one embodiment preferred. Examples of monosaccharides are glyceraldehyde, erythrose, threose, ribose, arabinose, xylose, lyxose, allose, altrose, mannose, glucose, gulose, idose, galactose, tallose, dihydroxyacetone, erythrulose, ribulose, xylulose, psicose, sorbose, tagatose and fructose. Disaccharides such as lactose and maltose and to a lesser extent sucrose, in view of its reducing capacity, or higher oligosaccharides may be used as well such as lacto-oligosaccharide, inulin, maltodextrin, amylose, stachyose, raffinose, etc. In the present method the reducing sugar can be any carbohydrate, e.g. mono-, di-, tri-, tetra- etc. oligosaccharide that can react with a free amine, in particular a lysine residue, of a protein. In one embodiment the reducing sugar is selected from the group consisting of glucose, galactose, arabinose, fructose, lactose, maltose and combinations thereof.

It is also envisaged, for example in cases of carbohydrates having sub-optimal reducing capacities, that functional groups in such a carbohydrate may be changed or added or activated or in any way be introduced to facilitate the reaction with amine groups, in particular amine groups of lysine residues in a protein. Such an embodiment may be particularly useful for coupling (otherwise low or non-reactive) oligosaccharides to gelling proteins. Suitable functional group transformations for this purpose are known to the skilled person.

Thus, following the step of combining protein (a) and reducing sugar, the combination thus obtained is heated to a temperature (T) above 25°C and below the denaturation temperature of the gelling protein (a) during a period of time (t) to glycosylate the gelling protein (a) to such a degree that at least 10% of the lysine residues are modified. It is preferred that the denaturation temperature of the gelling protein (a) is above 55°C, preferably above 60°C, more preferably above 65°C. The degree of lysine modification can be determined as described above. In order to let the glycosylation proceed more efficiently in an embodiment the heating step is carried out at a temperature T which exceeds 30°C, more preferably exceeds 35°C. In another embodiment the heating step is carried out at a temperature T which is maintained below 65°C, preferably below 60°C and most preferably below 55°C.

Thus at least to start the glycosylation it is necessary to heat the reaction mixture. It may be so that after starting the reaction by providing a sufficient amount of heat, the reaction will continue at room temperature. However, as is shown in the examples, heating may also be continued. Care should be taken not to heat too excessively in order to prevent irreversible denaturation of the protein. Sufficient and appropriate heating depends on the protein and the reducing sugar used to modify the protein. For the purpose of this invention the reaction mixture should be heated to at least 25°C and preferably should not exceed a temperature that is 10°C below the denaturation temperature of the protein in aqueous solution. To allow proper control of the glycosylation it is desirable not to use too high temperatures such as for example not to heat above 65°C.

Water is required to allow the glycosylation to proceed. Conveniently the water is present as moisture in the atmosphere and the reaction is carried out under humid conditions, suitably of at least 55% humidity. The reaction may also be carried out in aqueous solution, but this generally gives less reproducible results and is considered to result in unwanted denaturation of the protein. It is therefore an advantageous embodiment that the combination of undenatured gelling protein (a) and reducing sugar contains less than 40 wt.% water, preferably less than 20 wt.% water, when it is subjected to heating step b. Preferably the glycosylation is carried out under near neutral or alkaline conditions. Preferably at a pH above 5 and below 10 or in the range of pH 6-9, or in the range of pH 6.5 to 9.5, more preferably in the range of pH 7-8,5.

Alternatively in an embodiment of the present method it may be advantageous to include in step a. the additional step of dispersing the combination of undenatured gelling protein (a) and reducing sugar into water and then subjecting the resulting dispersion to the heat treatment step b as described above.

The reducing capacity of monosaccharides differs significantly; the higher the reducing capacity the faster the reaction takes place. Depending on for instance the desired degree of protein modification, the skilled man will be able to select a suitable reducing sugar. By varying the time of reaction, the degree of modification of the protein may be varied as determined by the number of lysine residues that is modified. It is a matter of routine experimentation for the skilled person, given a set of conditions in terms of temperature, presence of water and pH, to what degree, in other words for how long, the glycosylation should proceed. Thus by taking samples at certain time points and determining the degree of modification, the skilled man can easily determine a suitable heating time t. In an embodiment the heating step b in the present method is carried out at a temperature T (in °C) and during a heating time t (in minutes) which are chosen such that they are in accordance with the following equation: 150 ≤ (t)^{½} * (T-20) ≤ 1500. Typically, for glucose incubation times of 2-5 hours at 55°C at pH 7 are sufficient to obtain suitable degrees of modification.

It is also possible to subject a gelling protein (a) to routine synthetic procedures for coupling a carbohydrate to an amine functionality. Besides the heating step above, other synthetic methods to glycosylate lysine residues are known in the art such as described for instance in Christopher et al., 1980, Advances in carbohydrate chem.. Biochem. 37, 225-28; Caer et al., 1990, J. Agric. Food. Chem. 38, 1700-1706; Colas et al., 1993, J. Agric. Food. Chem. 41, 1811-1815; Hattori et al., 1996, J. Food. Sci. 61, 1171-1176. Also it is envisaged that the glycosylation of lysine residues in proteins can be carried out enzymatically. The skilled person will be able to recognise suitable enzymes for this glycosylation process.

Herein the OPA assay by Church is cited to determine the degree of glycosylation of a protein. Alternatively, or in addition to the OPA assay, a glycosylated protein in the context of this invention is a protein which upon heating for 60 min at 95°C, preferably under an atmosphere of at least 55% humidity, results in browning of the protein. This browning can be quantified by measuring the absorbance at 514 nm. It is understood that a modified protein displays an absorbance of at least 0.10 absorbance units per cm lightpath at a concentration of 5 mg/ml.

Also, glycosylation of the lysine residues in a protein leads to a change in isoelectric point (IEP) of the protein. Thus, alternatively or in addition to the OPA assay and/or the absorbance at 514 nm of the further heated product, in the context of this invention a glycosylated protein is a protein which displays an IEP that is lower compared to the isoelectric point of the unmodified protein as can be determined by gel electrophoresis.

Once the number of available lysine residues in a protein is known, for instance by using the OPA assay, the percentage of modification may also be determined by means of mass spectrometry, for instance MALDI-TOF MS. It may be expected that the increase in mass after modification correlates with a whole number of carbohydrate molecules that is used.

The glycosylation reaction of step b. may give rise to negative effects on color, aroma and flavor. In one embodiment, however, the occurrence of effects on color, aroma and flavor is avoided or prevented. In other words in an embodiment essentially no flavour formation or caramelisation occurs during the heating step b. Such effects can easily sensorially be detected.

As already mentioned modification of a protein by glycosylation increases the denaturation temperature of that protein. In an embodiment of the present method in step b. the denaturation temperature of the gelling protein (a) is increased by at least 2°C, preferably by at least 5 °C.

As mentioned above the present method in essence comprises the subsequent steps of providing an aqueous solution containing an essentially undenatured glycosylated gelling protein (a) and an essentially undenatured second gelling protein and aggregating the glycosylated first gelling protein and the second gelling protein by heating the aqueous solution to a temperature above the aggregation temperature of both the first glycosylated gelling protein and the second gelling protein. Gelling protein (b) is included in step c. of the present method. Gelling protein (b) may or may not be glycosylated. In order to allow proteins (a) and (b) to aggregate in a subsequent heating step, both proteins should be present in aqueous solution in a suitable concentration. In particular if the glycosylation step b. is carried out not in aqueous solution, it is required to provide in step c. an aqueous solution containing between 0.1 and 30 wt.% of the glycosylated gelling protein (a) and between 0.1 and 30 wt.% of essentially undenatured gelling protein (b). Thus in one embodiment of the present method following step b. and prior to step d. the gelling protein (b) is added to the glycosylated gelling protein (a), preferably in a weight ratio between 10:1 and 1:10, preferably in a weight ratio of between 5:1 and 1:5. The same weight ratios apply in the case where gelling protein (b) is added in step (a).

Protein (a) can be any protein that is susceptible to glycosylation and preferably is capable of forming a gel. The term 'gel' is known to the skilled person and for instance refers to an aggregated substance that cannot be poured, or essentially retains its shape when one tries to pour the substance from a container.

Protein (a) can be a mixture of proteins. Protein (b) can also be a mixture of proteins. In one embodiment both the gelling protein (a) and the gelling protein (b) are globular proteins selected from the group consisting of whey proteins, egg proteins, plant seed proteins and combinations thereof In one embodiment gelling protein (a) is selected from whey proteins, egg proteins and plant seed proteins and gelling protein (b) is selected from whey proteins, egg proteins and plant seed proteins and is not the same as gelling protein (a). As shown in the examples suitable combinations of proteins in the present method are whey protein and egg white protein, soy protein and egg white protein and β-lactoglobulin and ovalbumin. In an embodiment of the present invention gelling protein (a) is selected from whey protein and plant seed protein. In an embodiment gelling protein (b) is egg protein, preferably egg white protein. In particular in an embodiment of the present method the glycosylated gelling protein (a) is glycosylated β-lactoglobulin and in a further embodiment the gelling protein (b) is ovalbumin.

Other suitable proteins that could be used as protein (a) are those that are globular and have a typical kinetics of unfolding at the millisecond timescale when exposed to a denaturing environment, like horse heart cytochrome c or egg lysozyme. Typical proteins that could be used as protein (b) are those that are globular and typically require more than a few seconds to unfold when exposed to a denaturing environment, like transferases, rubredoxins or bovine trypsinogen. The rationale of this selection based on unfolding kinetics is related to the number of ion-pairs on the protein surface (the larger this number the more time it generally requires for a protein to unfold). Concomitantly, the fewer the number of ion-pairs, the more the denaturation temperature will increase with increasing number of reacted lysines.

In a subsequent step of the method of the present invention, the aqueous solution comprising glycosylated gelling protein (a) and gelling protein (b) is subjected to a heating step to allow the formation of a mixed aggregate of proteins (a) and (b). Thus in the present method the aggregation step d. yields aggregates that comprise, or in an alternative embodiment essentially consist of both proteins (a) and (b). The aqueous solution should be heated to a temperature above the aggregation temperature of both the glycosylated gelling protein (a) and the gelling protein (b). The skilled person can easily observe if a temperature that is sufficiently high enough is reached and also if heating is continued for sufficiently long enough by the formation of an aggregated structure, in particular a gel. For example in the case of a mixture of whey proteins or soy proteins and egg white protein or a mixture of glycosylated β-lactoglobulin and ovalbumin, a temperature of aggregation of 75°C or higher is sufficient. The time of heating that is sufficient to let aggregation occur will depend on protein concentration and degree of modification and may be at least 30 seconds or at least 1 minute or several minutes or at least 5 minutes or at least 10 minutes or more, for example at least 15 minutes or at least 30 minutes.

In the context of this invention a gel is defined as a coherent mass consisting of a liquid in which proteins (a) and (b) are arranged in a fine network throughout the mass, in particular a gel is here defined as a coherent mass that under gravity forces retains its shape for a prolonged period of time (minutes) having an elastic modulus typically exceeding 500 Pa or the coherent mass is a sheared gel.

The mixed aggregates that are obtained with the present method are of use to be further processed in food or foodstuffs In this respect it may be beneficial to already include in the present method one or more food additives. Food additives may be included prior to carrying out step d., for instance prior to or during step c. or after step b. or during or after step a. or prior to step b. Thus in one embodiment the method according to the invention additionally comprises the incorporation of one or more food additives. In particular one or more food additives are selected from the group consisting of flavourings, fat, colourings, sweetener, viscosifiers, stabilizing agents and preservatives Optionally the resulting foodstuff is packaged.

The invention also concerns a mixed aqueous aggregate or gel with modified aggregation behaviour of a mixture of at least two different gelling proteins obtainable by the method as described above.

In particular, in another aspect the invention also relates to a mixed aqueous gel comprising at least 0.1 wt.% of a gelling protein (a) selected from the group consisting of-whey protein, soy protein and β-lactoglobulin and at least 0.1 wt.% of another gelling protein (b) selected from the group consisting of egg white protein and ovalbumin, wherein the gelling protein (a) is glycosylated to such a degree that at least 10% of the lysine residues are modified.

It may be advantageous to glycosylate protein (a) to a higher degree, such as for instance to such a degree that at least 15%, preferably at least 20% or at least 25% of the lysine residues are modified. Also protein (b) may be glycosylated, preferably gelling protein (b) is glycosylated to such a degree that the resulting increase of the denaturation temperature caused by this glycosylation is less or substantially smaller that the increase in denaturation temperature achieved for protein (a). Thus in one embodiment the gelling protein (b) is glycosylated to such a degree that the increase of the denaturation temperature of protein (b) as a result of the glycosylation of protein (b) is less than the increase of the denaturation temperature of protein (a) as a result of the glycosylation of protein (a). Less or substantially smaller means that the increase of the denaturation temperature of protein (b) is at least 1°C, or at least 2°C, or at least 3°C or even at least 4°C lower than the increase of the denaturation temperature of protein (a) In another embodiment gelling protein (b) is non-glycosylated.

In one embodiment the mixed aqueous gel comprises glycosylated gelling protein (a) and gelling protein (b) in a weight ratio of between 10:1 and 1:10, preferably in a weight ratio of between 5:1 and 1:5.

In one embodiment the mixed aqueous gel according to the invention is a sheared aqueous gel, i.e. a gel wherein the gelling proteins are above the critical concentrations for gelation to occur but still displays flowing behaviour.

The present method and the present mixed aqueous gels can particularly be used to prepare food or foodstuffs or can particularly be applied in food or foodstuffs and thereby providing food or foodstuffs with improved gelling, gelation or gel-structure properties. In particular the invention concerns a foodstuff comprising between 10 and 99.99 wt.% of a mixed aqueous gel according to the present invention. Suitable food or foodstuffs that comprise the mixed aqueous gel according to the present invention are for instance desserts, bakery fillings, toppings, dressings, mayonnaise, spreads.

### EXAMPLES

### Example 1

Following known methodologies batches of (100%)-glycosylated β-lactoglobulin and (100%)-glycosylated ovalbumin were prepared. Batches of native (unmodified β-lactoglobulin and ovalbumin) were also prepared.

The rates of aggregation of the unmodified and modified β-lactoglobulin and ovalbumin preparations were determined. In the following experiments mixtures of (un)modifed β-lactolgobulin and ovalbumin were heated and the aggregation and gelation and aggregation properties were monitored.

### Brief description of results:

Since the rates of aggregation of β-lactoglobulin and ovalbumin should match during the formation of possible mixed aggregates, the rates of aggregation (measured as the disappearance of native protein) of ovalbumin (1%) and β-lactoglobulin (8%) were determined (note that the rate of ovalbumin aggregation is independent of the protein concentration and the rate of β-lactoglobulin aggregation is dependent on the protein concentration). Based on the intensities of the protein bands on native PAA gels the rate of decrease of native protein could be determined as a function of time during heating at 75 °C (pH 7.0 10 mM phosphate buffer). β-lactoglobulin was also heated in the presence of calcium (10 mM), since this cation is known to affect the rate of aggregation of β-lactoglobulin to a large extent, which resulted in rapid gel-formation (only samples of the first 20 minutes of the aggregation experiment could be analysed).

It was found that rates of aggregation of both β-lactoglobulin and ovalbumin are of the same order of magnitude at the concentrations used. Moreover, it is not necessary to increase the rate of β-lactoglobulin aggregation any further by for example the addition of calcium.

It was tested at which concentration of ovalbumin, gelation occurs, since it is known that gelation of ovalbumin occurs at lower protein concentration than β-lactoglobulin. Using the freshly isolated ovalbumin batch, gelation was not observed at a concentration of 4%. Above this concentration gelation was seen after prolonged heating at 75 °C.

In a next experiment the mixtures described in the table below were heated at 75 °C (20 hours) and the resulting solutions were studied qualitatively.

| *Protein mixture* | *Result* |
|---|---|
| 4% β-lactoglobulin | Fluid |
| 4% native ovalbumin | Fluid |
| 4% native β-lactoglobulin + 4% native ovalbumin | Fluid (slightly viscous) |
| 4% glyc-β-lactoglobulin + 4% native ovalbumin | Highly viscous |

From these experiments it can be concluded that a mixture of pre-processed proteins and other (native) proteins can result in aggregates with different properties resulting in more efficient space-filling networks.

The resulting aggregates from the experiments described above were analysed on agarose-gel stained with Coomassie. All samples (ova=ovalbumin; β-lg= β-lactoglobulin) were heated at 75 °C for 18 hours at pH 7. Samples analysed were: 1) 4% native β-lg; 2) 4% native ova; 3) 4% native β-lg + 4% native ova; 4) 4% glyc-β-lg + 4% native ova; 5) 3% glyc-β-lg + 3% native ova; 6) 3% glyc-β-lg + 3% glyc-ova; 7) 2% glyc-β-lg + 2% native ova; 8)4% glyc-β-lg.

From the agarose-gel stained with Coomassie it was seen that heating 4% ovalbumin results in the formation of large aggregates that do not enter the gel. The same holds for the mixed systems (4% native β-lg + 4% ovalbumin and 4% glyc-β-lg + 4% native ovalbumin). From the gel it cannot be seen whether aggregates of a different size are formed in the mixed systems. Therefore, mixtures of (glyc-)β-lg and (gly-)ovalbumin at lower concentrations were prepared and heated at 75 °C. From comparison of samples 5 and 6 it can be concluded that heating a mixture of glyc-β-lg and glyc-ovalbumin leads to aggregates which are larger than in the case of a mixture native β-lg and native ovalbumin. This observation is in line with the observation that a gel is formed when 4% glyc-β-lg and 4% glyc-ovalbumin is heated, which does not occur when 4% glyc-β-Ig and 4% native ovalbumin is heated.

Further, the size of aggregates produced from a solution of 4% native β-lg is smaller than the size of aggregates produced with a mixtre of 2% of both proteins. Moreover, 4% native ovalbumin leads to the formation of very large aggregates. It is therefore concluded based on these results that mixed aggregates are produced from a mixture of glyc-β-lg and ovalbumin.

### Conclusion:

It is possible to modify the aggregation properties of a protein mixture consisting of β-lactoglobulin and ovalbumin by pre-processing β-lactoglobulin. From the results described above it is concluded that mixed aggregates are formed in a mixture of glycosylated-β-lg and ovalbumin.

### Example 2

β-lactoglobulin (2 grams) and ovalbumin (2 grams) and a mixture of 1.36 gram ovalbumin and 0.76 gram β-lactoglobulin were dissolved in 100 mL demi water and the pH of the solutions was adjusted to pH 8.0 with 0.1 M NaOH. To the β-lactoglobulin solution 1.91 gram, to the ovalbumin solution 1.09 gram and to the protein mixture 1.9 gram fructose was added. The solutions were frozen and freeze dried. The dried materials were divided into 4 portion of ~ 0.7 grams each. The protein samples were incubated at 55 °C in a glass incubator containing saturated NaNO₂ solutions to maintain a constant humidity of 65% during the experiment. Samples were taken at 3, 6 and 24 hours.

The glycosylated proteins were dissolved in 25 mL demi water, were dialysed against demi water at 4 °C (3 times 12 L), were frozen and were freeze dried.

Stock solutions of 80 mg/mL in 20 mM sodium phosphate buffer pH 7.0 were made for each glycosylated protein preparation and native protein. The β-lactoglobulin and ovalbumin solutions were mixed to achieve 1:1, 1:2 and 2:1 ratios (w/w) of β-lactoglobulin and ovalbumin. Only mixtures of 'similar' proteins were made (*i.e.* native:native, 3 hours glycosylation: 3 hours glycosylation etc). The 'premixed' β-lactoglobulin/ovalbumin mixtures were used without further mixing.

### Texture analysis:

In microtiter plates 200 µL samples of native, mixed native, unmixed glycosylated and mixed glycosylated protein solutions (in duplicate) were heated slowly from room temperature to 90 °C and were kept at 90 °C for 45 minutes. The plates were cooled to room temperature and stored at 4 °C until use. The consistency of the gels was analyzed with a texture analyzer equipped with a steel probe with 6 mm diameter. The probe was pushed into the gels with a speed of 0.2 mm/sec and the resistance was measured over a 5 mm traject.

The native proteins and mixtures of native proteins all form clear gels. Glycosylated β-lactoglobulin or mixtures with 1:1 or 2:1 β-lactoglobulin:ovalbumin do not form true gels, but can be best described as viscous solutions.

### Syneresis:

The same protein mixtures used for the texture analysis were made and heated in Amicon Centricon RC/YM 10 kDa cut-off filters. The gels and viscous solutions were centrifuged in a Hermle Z320 at 2000 rpm (~447 x g; 10 min at room temperature) and 3000 rpm (~ 1000x g). The mass decrease of the gels was measured after discarding the run through solutions. To test the strength of the gels a final run was made at 4000 rpm (~1800xg).

### Elastic modulus:

Aggregation and gelation of the binary proteins system of (glycosylated) β-lactoglobulin and ovalbumin were monitored in a VOR Bohlin rheometer, equipped with a concentric geometry (splined, roughned C14, 2.4 ml volume). Samples were mixed and placed at room temperature in the cylinder cup and covered with paraffin oil. Development of an elastic modulus was followed during a temperature gradient (1 K/min) using a continuous oscillation (0.15 Hz and 0.7% strain). After a heating trajectory from 20 to 85 deg C. The temperature was held constant for either 2 or 60 minutes and the sample was subsequently cooled down (1 K/min) to 20 deg C. All samples were dissolved in 10 mM phosphate buffer (pH 6.5)in the presence of 50 mM sodium chloride.

### Brief description of results:

### Texture analysis:

The data obtained have been interpreted while keeping in mind the small scale of the gels, the short distance which was used to measure the resistance and the 'wall effects'.

It was found that the gels of pure glycosylated ovalbumin are as strong as gels of the native protein. The β-lactoglobulin gel is more weak compared to ovalbumin. Glycosylation of β-lactoglobulin forms very weak gels under the conditions tested here. Mixtures of β-lactoglobulin and ovalbumin are also weak and resemble the 'gels' of glycosylated β-lactoglobulin.

### Syneresis:

At 447 x g no significant difference in syneresis was observed between the various gels. An average of 1- 4.8 % (w/w) water loss was observed. At 1000 x g the water loss did also not differ significantly between the samples and an average of 11.5 - 18 % (w/w) water loss was observed. It is remarkable that also the viscous solutions (as obtained with glycosylated protein seem to have good water holding capacity comparable with the protein gels. At 1800 x g the gels were deformed, but still intact.

### Elastic modulus:

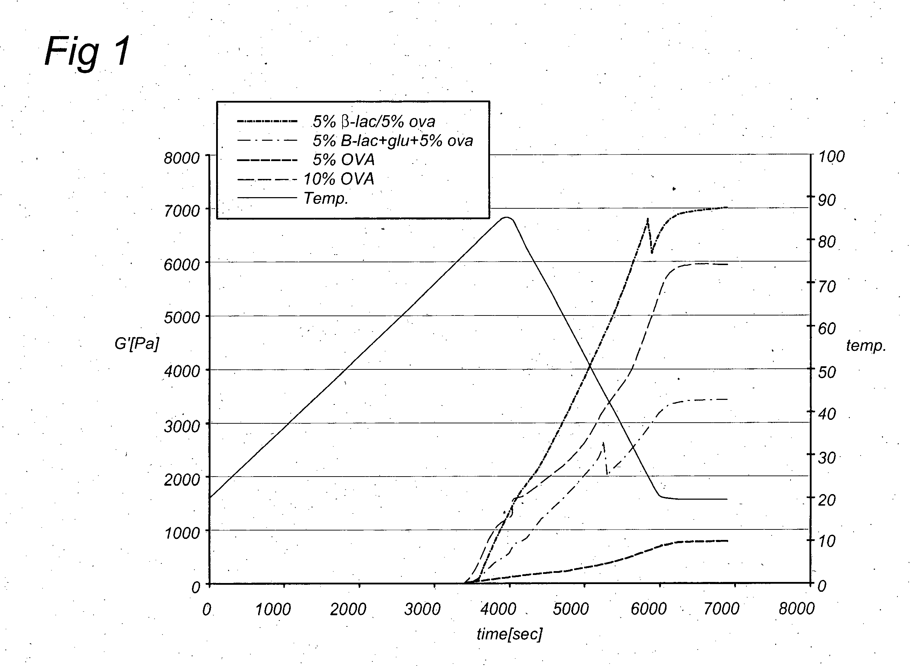

As illustrated in figure 1, the combination of 5% ovalbumin with 5% b-lactoglobulin gives gels with an about 12% increase in gel strength (elastic modulus) upon heating the sample to 85°C and immediate cooling down to room temperature compared to a 10% ovalbumin sample. Using glycosylated β-lactoglobulin in the same mixture provides a final gel strength that is only half of that for the non-glycosylated material (and thus also significantly lower than that of 10% ovalbumin alone).

### Conclusion:

Glycosylation of ovalbumin did not alter the gelling capacity of the protein and gels appear to be as strong as those of the native protein. While a mixed gel of equimolar amounts non-modified ovalbumin and β-lactoglobulin provides gels with higher gel strength, glycosylation of β-lactoglobulin lowers the gel strength of the mixed proteins significantly.

### Example 3

A solution of 10 g whey protein (Hiprotal 580HG, Frieslandfoods Domo) dissolved in 400 ml demi water was prepared. Hiprotal 580HG contains about 80% protein, of which 83.5% of the total protein content is β-lactoglobulin, the other part mainly being non-aggregating casein macro peptide. To the solution, 13.80 gram lactose monohydrate was added. The pH of the solution was adjusted to pH = 8.0 with 1M NaOH. Subsequently, the solution was frozen and freeze dried.
The dried material was incubated at 55°C and 65% RH on a Vötsch climate cabinet for 24hrs.

Aggregation and gelation of a binary protein system containing 5% (glycosylated) β-lactoglobulin in Hiprotal 580HG and 5% egg white protein were monitored on an Anton Paar rheometer, equipped with couette geometry (double gap). Egg white protein was obtained from liquid pasteurized egg white (Ovod'or, Van Tol Convenience Food BV), containing a total of 10% protein. The samples were mixed in a 10mM phosphate buffer (pH 6.5).
The elastic modulus was followed during a temperature gradient of 1Kmin⁻¹ using continuous oscillation (0.15Hz and 0.7% strain). After a heating trajectory from 20 to 85°C, the temperature was held constant for 2 min at 85°C. Subsequently; the sample was cooled down with 1Kmin⁻¹ to 20°C.

### Elastic modulus:

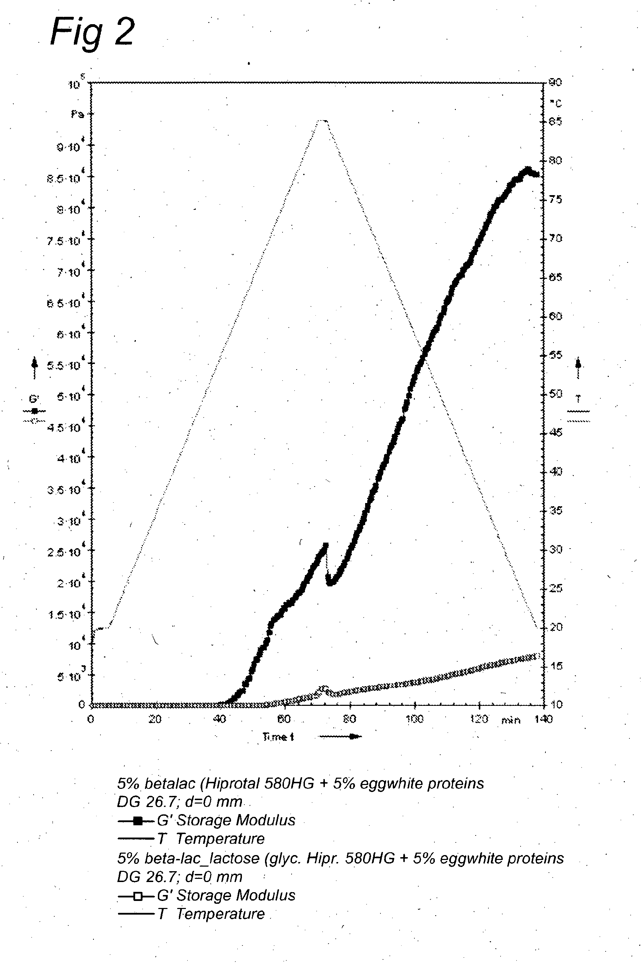

As illustrated in figure 2, the combination of 5% glycosylated whey protein with 5% egg white protein results in a gel with 10 times lower elastic modulus (G') after the heat trajectory, compared to the combination of 5% non-glycosylated whey protein with 5% egg white protein. Also the onset of gelation appears postponed to higher temperature.

### Example 4

A solution of 8.0 g soy meal (Sunsoy-20, Fa. Wed. W. Miedendorp) was dissolved in 400 ml demi water. Sunsoy-20 contains a total of 40% protein. To the solution, 17.44 gram lactose monohydrate was added. The pH of the solution was adjusted to pH = 8.0 with 1M NaOH. Subsequently, the solution was frozen and freeze dried. The dried material was incubated at 55°C and 65% RH on a Vötsch climate cabinet for 24hrs.

Aggregation and gelation of a binary protein system containing 5% (glycosylated) soy protein and 5% egg white protein, as in example 3, were monitored on an Anton Paar rheometer, equipped with couette geometry (double gap). The samples were mixed in a 10mM phosphate buffer (pH 6.5).
The elastic modulus was followed during a temperature gradient of 1Kmin⁻¹ using continuous oscillation (0.15Hz and 0.7% strain). After a heating trajectory from 20 to 85°C, the temperature was held constant for 2 min at 85°C. Subsequently; the sample was cooled down with 1Kmin⁻¹ to 20°C.

### Elastic modulus:

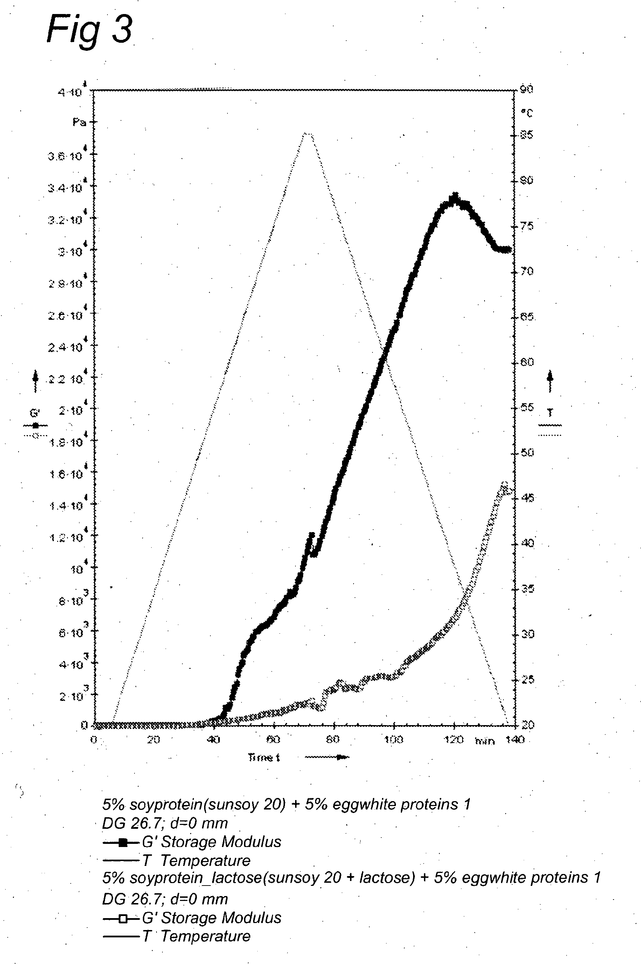

As illustrated in figure 3, the combination of 5% glycosylated soy protein with 5% egg white protein results in a gel with 50% decreased elastic modulus (G') after the heat trajectory, compared to the combination of 5% non-glycosylated soy protein with 5% egg white protein.

### Conclusion of examples 3 and 4

While a mixed gel of whey protein concentrate and egg white protein provides gels with higher gel strength, glycosylation of whey protein or soy protein with lactose results in significant lowering of the gel strength of the mixed proteins.

### Determination of free primary amino groups by OPA

### Principle:

To determine the degree of lysine modification the method described by Church et al. (1983) Dairy Sci, 66, 1219-1227 can be used. This method is based on the specific reaction between ortho-phtaldialdehyde (OPA) and free primary amino groups in proteins in the presence of 2-(dimethylamino)ethanethiol hydrochloride (DMA), to give alkyl-iso-indole derivatives that show an absorbance at 340 nm. The determination is very specific for lysines and the protein N-terminal group over arginines.

### Materials:

- 0.1 M Borax:: Dissolve 19.07 gram di-Natriumtetraborat-Decahydrat (Na₂B₄O₇·10H₂O) in 500 ml milliQ water.
- 10 % SDS:: Dissolve 10 gram Sodiumdodecylsulfate in 100 ml MilliQ water. (wear a fine dust mask).
- OPA reagens:: The OPA-reagent is prepared by dissolving 40 mg OPA (Sigma, P-0657) in 1 ml methanol, followed by the addition of 25 ml 0.1 M Borax buffer, 200 mg DMA (Aldrich, D14.100-3) and 5 ml 10% SDS. Adjust the volume to 50 ml with MilliQ water.
- 2 mM L-Leucine: Dissolve 13.1 mg L-Leucine (Pierce, Mw. 131.18) in 50 ml MilliQ water. Calculate the exact concentration.

### Procedure:

### Calibration curve:

1: Fill six quartz cuvettes with 3 ml of OPA reagent, weight and determine the absorbance (A_{blanc}) at 340 nm.
2: Add 10, 20, 40, 80, 120 and 150 µl of the 2 mM L-leucine stock solution (weight all) to 3 ml of OPA-reagent, yielding concentrations in the range from 0.0066 to 0.095 mM L-leucine.
3: Incubate 10 minutes at room temperature.
4: Determine the absorbance at 340 nm.
5: Fit data by linear regression. Calculate the molar extinction coefficient (ε) of alkyl-iso-indole derivative (=slope of linear function, should be 7000 ± 500 M⁻¹*cm⁻¹).

### Sample measurement:

1: Fill quartz cuvettes with 3 ml of OPA reagent, weight and determine the absorbance (A_{blanc}) at 340 nm.
2: Add 50 µl of a 5 mM NH₂-solution (approx. 10 mg/ml protein solution), weight and mix.
3: Incubate for 10 min at room temperature.
4: Determine the absorbance at 340 nm (Aₛₐₘₚₗₑ).
5: Calculate the molar concentration of NH₂: ΔA340/ε
6: Determine the molar protein concentration spectrophotometrically at 280 nm.
7: Calculate the amount of free NH₂ groups on the protein by dividing the molar concentration of NH₂ by the molar protein concentration.

### Remark:

All measurements are performed at least in duplicate.
If OPA reagents turns into pink colour instead of yellow before adding protein, most probably DMA is contaminated by secondary amines.

### Determination of reducing carbohydrates using the Luff reagens

The below-described procedure can be used to identify the presence of reducing carbohydrates. The method is qualitative.

### Luff reagents

Solution:
A 25 g coppersulfate (CuSO4.5H2O) in 100 ml demineralised water.
B 50 g citric acid in 50 ml demineralised water.
C 143.8 g sodium carbonate in 400 ml lukewarm water.

After equilibration of the above-described solutions to room temperature, solution B and C are added together. Next, solution A is added. Demineralised water is added to obtain a final volume of 1 litre. This reagens can be used for a couple of days.

### Procedure:

1. Prepare a 1 wt% carbohydrate solution.
2. Pipette 1 ml of the carbohydrate solution (diluted to 0.1% (v/v)) in 2 reaction tubes.
3. Add to the first tube every time 0.5 ml demineralised water and to the second tube 0.5 ml 0.1 N iodine solution and 2 to 3 drops 1 N NaOH. Mix these solutions well and leave them for 15 min. at room temperature.
4. Pipette in all tubes 2 ml copper reagens according to Luff. Mix and place the tubes in a boiling waterbath and heat for 5-10 minutes.

A red precipitate indicates the presence of reducing carbohydrates.

## Claims

1. A method for the preparation of a mixed aggregate with modified aggregation behaviour of a mixture of at least two different gelling proteins (a) and (b), said method comprising the subsequent steps of:
a. combining essentially undenatured gelling protein (a) and reducing sugar in a weight ratio of between 20:1 and 1:20;
b. heating said combination to a temperature (T) above 25°C and below the denaturation temperature of the gelling protein (a) during a period of time (t) to glycosylate the gelling protein (a) to such a degree that at least 10% of the lysine residues are modified;
c. providing an aqueous solution containing between 0.1 and 30 wt.% of the glycosylated gelling protein (a) and between 0.1 and 30 wt.% of essentially undenatured gelling protein (b); and
d. aggregating the glycosylated gelling protein (a) and the gelling protein (b) by heating the aqueous solution to a temperature above the aggregation temperature of both the glycosylated gelling protein (a) and the gelling protein (b),
wherein the gelling protein (b) is included in step c.

2. The method according to claim 1, wherein both the gelling protein (a) and the gelling protein (b) are a globular protein selected from the group consisting of whey proteins, egg proteins, plant seed proteins and combinations thereof.

3. The method according to claim 1 or 2, wherein the reducing sugar is selected from the group consisting of glucose, galactose, arabinose, fructose, lactose, maltose and combinations thereof.

4. Method according to any one of the preceding claims, wherein the temperature T exceeds 30°C, more preferably exceeds 35°C and preferably is maintained below 65°C, preferably below 60°C and most preferably below 55°C.

5. Method according to any one of the preceding claims wherein the temperature T (in °C) and the heating time t (in minutes) are chosen in accordance with the following equation: 150 ≤ (t)^{½} * (T-20) ≤ 1500.

6. Method according to any one of the preceding claims, wherein step a. additionally comprises the step of dispersing the combination of undenatured gelling protein (a) and reducing sugar into water and wherein the resulting dispersion is subjected to the heat treatment step b.

7. Method according to any one of the preceding claims, wherein the heating step b. increases the denaturation temperature of the gelling protein (a) by at least 2°C, preferably by at least 5 °C.

8. Method according to any one of the preceding claims, wherein following step b. and prior to step d. the gelling protein (b) is added to the glycosylated gelling protein (a) in a weight ratio between 10:1 1 and 1:10, preferably in a weight ratio of between 5:1 1 and 1:5.

9. Method according to claim 8, wherein the glycosylated gelling protein (a) is glycosylated whey protein, glycosylated soy protein or glycosylated β-lactoglobulin and the gelling protein (b) is egg white protein or ovalbumin.

10. A mixed aqueous gel obtainable by the method according to any one of claims 1-9, comprising at least 0.1 wt.% of a gelling protein (a) selected from whey protein, soy protein and β-lactoglobulin and at least 0.1 wt.% of another gelling protein (b) selected from egg white protein and ovalbumin, wherein the gelling protein (a) is glycosylated to such a degree that at least 10% of the lysine residues are modified.

11. Mixed aqueous gel according to any claim 10, wherein said gel comprises glycosylated gelling protein (a) and gelling protein (b) in a weight ratio of between 10:1 and 1:10, preferably in a weight ratio of between 5:1 1 and 1:5.

12. Mixed aqueous gel according to any one of claims 10-11 which is a sheared aqueous gel.

13. A foodstuff comprising between 10 and 99.99 wt.% of a mixed aqueous gel according to any one of claims 10-12.

14. A foodstuff according to claim 13, said foodstuff being selected from the group consisting of desserts, bakery fillings, toppings, dressings, mayonnaise, spreads.

## Patentansprüche

1. Verfahren zur Zubereitung eines gemischten Aggregationsproduktes mit modifiziertem Aggregationsverhalten einer Mischung aus mindestens zwei unterschiedlichen gelierenden Proteinen (a) und (b), wobei das Verfahren die nachfolgenden Schritte umfasst:
a. Kombinieren von im Wesentlichen undenaturiertem, gelierendem Protein (a) und reduzierendem Zucker in einem Gewichtsverhältnis von zwischen 20:1 und 1:20;
b. Erwärmen der Kombination auf eine Temperatur (T) über 25°C und unterhalb der Denaturierungstemperatur des gelierenden Proteins (a) während einer Zeitdauer (t) zur Glykosylierung des gelierenden Proteins (a) in einem solchen Maße, dass mindestens 10% der Lysinrückstände modifiziert werden;
c. Bereitstellen einer wässrigen Lösung, die zwischen 0,1 und 30 Gew.-% des glykosylierten, gelierenden Proteins (a) und zwischen 0,1 und 30 Gew.-% von im Wesentlichen undenaturiertem, gelierendem Protein (b) enthält; und
d. Aggregieren des glykosylierten, gelierenden Proteins (a) und des gelierenden Proteins (b) durch Erwärmen der wässrigen Lösung auf eine Temperatur oberhalb der Aggregationstemperatur sowohl des glykosylierten, gelierenden Proteins (a) als auch des gelierenden Proteins (b),
wobei das gelierende Protein (b) im Schritt c zugesetzt wird.

2. Verfahren nach Anspruch 1, bei dem sowohl das gelierende Protein (a) als auch das gelierende Protein (b) ein globuläres Protein ist, das aus der Gruppe ausgewählt ist, die aus Molkenproteinen, Eiproteinen, Pflanzensamenproteinen und deren Kombinationen besteht.

3. Verfahren nach Anspruch 1 oder 2, bei dem der reduzierende Zucker aus der Gruppe ausgewählt ist, die aus Glukose, Galaktose, Arabinose, Fruktose, Laktose, Maltose und deren Kombinationen besteht.

4. Verfahren nach einem der vorhergehenden Ansprüche, bei dem die Temperatur T 30°C überschreitet, noch besser 35°C überschreitet und vorzugsweise unter 65°C, vorzugsweise unter 60°C und am besten unter 55°C gehalten wird.

5. Verfahren nach einem der vorhergehenden Ansprüche, bei dem die Temperatur T (in °C) und die Erwärmungszeit t (in Minuten) entsprechend der folgenden Gleichung ausgewählt werden: 150 ≤ (t)^{1/2}* (T-20) ≤ 1500.

6. Verfahren nach einem der vorhergehenden Ansprüche, bei dem Schritt a. zusätzlich den Schritt Dispergieren der Kombination von undenaturiertem, gelierendem Protein (a) und reduzierendem Zucker zu Wasser umfasst, und bei dem die sich ergebende Dispersion dem Wärmebehandlungsschritt b. unterzogen wird.

7. Verfahren nach einem der vorhergehenden Ansprüche, bei dem der Erwärmungsschritt b. die Denaturierungstemperatur des gelierenden Proteins (a) um mindestens 2°C, vorzugsweise um mindestens 5°C, erhöht.

8. Verfahren nach einem der vorhergehenden Ansprüche, bei dem im Anschluss an Schritt b. und vor Schritt d. das gelierende Protein (b) dem glykosylierten, gelierenden Protein (a) beigemengt wird in einem Gewichtsverhältnis zwischen 10:1 und 1:10, vorzugsweise in einem Gewichtsverhältnis von zwischen 5:1 und 1:5.

9. Verfahren nach Anspruch 8, bei dem das glykosylierte, gelierende Protein (a) glykosyliertes Molkenprotein, glykosyliertes Sojabohnenprotein oder glykosyliertesβ-Laktoglobulin ist, und das gelierende Protein (b) Eiweißprotein oder Eialbumin ist.

10. Wässriges Mischgel zu erhalten durch das Verfahren nach einem der Ansprüche 1 bis 9, umfassend mindestens 0,1 Gew.-% eines gelierenden Proteins (a), das aus Molkenprotein, Sojabohnenprotein und β-Laktoglobulin ausgewählt ist, und mindestens 0,1 Gew.-% eines anderen gelierenden Proteins (b), das aus Eiweißprotein und Eialbumin ausgewählt ist, wobei das gelierende Protein (a) in einem solchen Maße glykosyliert wird, dass zumindest 10% der Lysinrückstände modifiziert werden.

11. Wässriges Mischgel nach Anspruch 10, wobei das Gel glykosyliertes, gelierendes Protein (a) und gelierendes Protein (b) in einem Gewichtsverhältnis von zwischen 10:1 und 1:10, vorzugsweise in einem Gewichtsverhältnis von zwischen 5:1 und 1:5, aufweist.

12. Wässriges Mischgel nach einem der Ansprüche 10 bis 11, welches ein scherbehandeltes, wässriges Gel ist.

13. Lebensmittel, umfassend zwischen 10 und 99,99 Gew.-% eines wässrigen Mischgels nach einem der Ansprüche 10 bis 12.

14. Lebensmittel nach Anspruch 13, wobei das Lebensmittel aus der Gruppe ausgewählt ist, die aus Nachspeisen, Backfüllungen, Toppings, Dressings, Mayonnaise, Aufstrichen besteht.

## Revendications

1. Procédé pour la préparation d'un agrégat mixte, ayant un comportement d'agrégation modifié, d'un mélange d'au moins deux protéines gélifiantes (a) et (b) différentes, ledit procédé comprenant les étapes
suivantes consistant à :
a. combiner une protéine gélifiante essentiellement non dénaturée (a) et un sucre réducteur dans un rapport pondéral compris entre 20/1 et 1/20 ;
b. chauffer ladite composition à une température (T) supérieure à 25°C et inférieure à la température de dénaturation de la protéine gélifiante (a) durant une période de temps (t) suffisante pour glycosyler la protéine gélifiante (a) dans une mesure telle qu'au moins 10 % des résidus de lysine soient modifiés ;
c. disposer d'une solution aqueuse contenant entre 0,1 et 30 % en poids de la protéine gélifiante glycosylée (a) et entre 0,1 et 30 % en poids d'une protéine gélifiante essentiellement non dénaturée (b) ; et
d. agréger la protéine gélifiante glycosylée (a) et la protéine gélifiante (b) en chauffant la solution aqueuse à une température supérieure à la température d'agrégation de la protéine gélifiante glycosylée (a) ainsi que à la température d'agrégation de la protéine gélifiante (b),
dans lequel la protéine gélifiante (b) est incorporée dans l'étape c.

2. Procédé selon la revendication 1, dans lequel la protéine gélifiante (a) et la protéine gélifiante (b) sont toutes deux des protéines globulaires choisies dans le groupe constitué par les protéines de lactosérum, les protéines d'oeuf, les protéines de germes de plantes et leurs combinaisons.

3. Procédé selon la revendication 1 ou 2, dans lequel le sucre réducteur est choisi dans le groupe constitué par le glucose, le galactose, l'arabinose, le fructose, le lactose, le maltose et leurs combinaisons.

4. Procédé selon l'une quelconque des revendications précédentes, dans lequel la température T dépasse 30°C, mieux encore dépasse 35°C, et de préférence est maintenue inférieure à 65°C, de préférence inférieure à 60°C et plus préférablement inférieure à 55°C.

5. Procédé selon l'une quelconque des revendications précédentes, dans lequel la température T (en °C) et le temps de chauffage t (en minutes) sont choisis en fonction de l'équation suivante : 150 ≤ (t)^{1/2} * (T - 20) ≤ 1500.

6. Procédé selon l'une quelconque des revendications précédentes, dans lequel l'étape a. comprend de plus l'étape consistant à disperser la combinaison de protéine gélifiante non dénaturée (a) et de sucre réducteur dans de l'eau, et dans lequel la dispersion résultante est soumise à l'étape b. de traitement à la chaleur.

7. Procédé selon l'une quelconque des revendications précédentes, dans lequel l'étape b. de chauffage augmente la température de dénaturation de la protéine gélifiante (a) d'au moins 2°C, de préférence d'au moins 5°C.

8. Procédé selon l'une quelconque des revendications précédentes, dans lequel, après l'étape b. et avant l'étape d., la protéine gélifiante (b) est ajoutée à la protéine gélifiante glycosylée (a) en un rapport en poids compris entre 10/1 et 1/10, de préférence en un rapport pondéral compris entre 5/1 et 1/5.

9. Procédé selon la revendication 8, dans lequel la protéine gélifiante glycosylée (a) est une protéine de lactosérum glycosylée, une protéine de soja glycosylée ou la β-lactoglobuline glycosylée, et la protéine gélifiante (b) est une protéine de blanc d'oeuf ou l'ovalbumine.

10. Gel aqueux mixte pouvant être obtenu par le procédé selon l'une quelconque des revendications 1 à 9, comprenant au moins 0,1 % en poids d'une protéine gélifiante (a) choisie parmi une protéine de lactosérum, une protéine de soja et la β-lactoglobuline, et au moins 0,1 % en poids d'une autre protéine gélifiante (b) choisie parmi une protéine de blanc d'oeuf et l'ovalbumine, dans lequel la protéine gélifiante (a) est glycosylée à un degré tel qu'au moins 10 % des résidus de lysine soient modifiés.

11. Gel aqueux mixte selon la revendication 10, lequel gel comprend la protéine gélifiante glycosylée (a) et la protéine gélifiante (b) en un rapport en poids compris entre 10/1 et 1/10, de préférence en un rapport en poids compris entre 5/1 et 1/5.

12. Gel aqueux mixte selon l'une quelconque des revendications 10 et 11, qui est un gel aqueux cisaillé.

13. Denrée alimentaire comprenant entre 10 et 99,99 % en poids d'un gel aqueux mixte selon l'une quelconque des revendications 10 à 12.

14. Denrée alimentaire selon la revendication 13, ladite denrée alimentaire étant choisie dans le groupe constitué par les desserts, les garnitures de boulangerie, les nappages, les sauces, la mayonnaise, les pâtes à tartiner.
